# DEMANDE DE BREVET EUROPEEN

(11) **EP 4 117 229 A1**
(43) Date de publication de la demande: **11.01.2023**
(21) Numéro de dépôt: 21305930.6
(22) Date de dépôt: 05.07.2021
(51) Int. Cl.: H04L 9/40

(54) **PROCÉDÉ DE DÉTECTION D'ANOMALIE(S) DANS UN RÉSEAU BLOCKCHAIN ET RÉSEAU BLOCKCHAIN METTANT EN UVRE UN TEL PROCÉDÉ**

(71) Demandeur: Bull SAS, 78340 Les Clayes-sous-Bois (FR); Institut de Recherche Technologique Systemx, 91120 Palaiseau (FR)
(72) Inventeur: LEPORINI, David, 94150 RUNGIS (FR); HEBERT, Guillaume, 69003 LYON (FR); DURAND, Antoine, 91300 MASSY (FR)
(74) Mandataire: IPAZ

(57) **Abrégé**

L'invention concerne un procédé (200) de détection d'anomalie(s) au sein d'un réseau blockchain comprenant une pluralité de nœuds, ledit procédé (200) comprenant au moins une itération des étapes suivantes :
- pour au moins un nœud, dit nœud mesuré, dudit réseau, mesure (102) d'au moins un paramètre de fonctionnement dudit nœud mesuré ; et
- injection (104) de ladite au moins une valeur mesurée d'au moins un paramètre de fonctionnement dans au moins un modèle heuristique prédéterminé signalant une éventuelle anomalie au sein dudit réseau blockchain en fonction de ladite au moins une valeur mesurée.

Elle concerne également un programme d'ordinateur comprenant des instructions informatiques, qui, lorsqu'elles sont exécutées par un appareil informatique, mettent en œuvre le procédé.

Elle concerne en outre un réseau blockchain configuré pour mettre en œuvre un procédé de détection d'anomalies.

## Description

La présente invention concerne un procédé de détection d'anomalie(s) au sein d'un réseau blockchain. Elle concerne également un réseau blockchain mettant en œuvre ledit procédé de détection d'anomalie.

Le domaine de l'invention est le domaine des réseaux blockchain, en particulier le domaine de la détection d'une anomalie au sein d'un réseau blockchain.

### État de la technique

Les protocoles blockchain, qu'ils soient de type ouverts ou fermés, sont réputés pour le niveau de sécurité qu'ils garantissent à un réseau, tant sur le plan de la sureté que de la réactivité dudit réseau blockchain.

Malgré le niveau de sécurité élevé des protocoles blockchain, les réseaux blockchain n'en restent pas moins des cibles privilégiées de cyberattaques.

Il existe différentes techniques permettant d'améliorer la sécurité au sein d'un réseau blockchain et ainsi permettre une meilleure défense face à une éventuelle cyberattaque. Il est par exemple possible de renforcer la cryptographie de clefs privées, ou d'utiliser des portefeuilles froids pour stocker lesdites clefs privées hors ligne.

Ces solutions, prévues en amont, permettent d'augmenter la sécurité de chaque nœud du réseau blockchain au niveau du protocole de sécurité qui est mis en œuvre dans le réseau blockchain, mais ne permettent pas de détecter une attaque en cours du réseau blockchain. Il n'existe actuellement aucune solution permettant de détecter une attaque en cours au sein d'un réseau blockchain.

Actuellement, il est notamment impossible de détecter une attaque exploitant des limitations ou des contraintes liées au protocole de sécurité en lui-même. Par exemple, il est impossible de détecter une attaque visant à ralentir la transmission de messages au sein du réseau lorsque le protocole de sécurité dépend d'une bonne synchronisation des données au sein dudit réseau.

De plus, il est également actuellement impossible de détecter une attaque de type éclipse visant à isoler un ou plusieurs nœuds du reste du réseau blockchain.

Un but de la présente invention est de remédier à au moins un des inconvénients précités.

Un autre but de la présente invention est de proposer un procédé de détection d'attaques exploitant des limitations ou des contraintes liées au modèle de sécurité d'un réseau blockchain.

Un autre but de la présente invention est de proposer un procédé de détection d'attaques de type éclipse.

Un autre but de la présente invention est de proposer un procédé de détection léger à implémenter dans un réseau blockchain.

### Exposé de l'invention

L'invention permet d'atteindre au moins l'un de ces buts par un procédé de détection d'anomalie(s) au sein d'un réseau blockchain comprenant une pluralité de nœuds, ledit procédé comprenant au moins une itération des étapes suivantes :
- pour au moins un nœud, dit nœud mesuré, dudit réseau, mesure d'au moins un paramètre de fonctionnement dudit nœud mesuré ; et
- injection de ladite au moins une valeur mesurée d'au moins un paramètre de fonctionnement dans au moins un modèle heuristique prédéterminé signalant une éventuelle anomalie au sein dudit réseau blockchain en fonction de ladite au moins une valeur mesurée.

L'invention propose ainsi un procédé permettant de détecter une anomalie se produisant au sein d'un réseau blockchain à partir d'une mesure de la valeur d'au moins un paramètre de fonctionnement d'au moins un nœud du réseau. Le fonctionnement d'au moins un nœud du réseau de blockchain étant perturbé lors d'une cyberattaque, il est possible avec le procédé selon l'invention de détecter une anomalie symptomatique d'une cyberattaque en injectant la valeur mesurée d'un paramètre de fonctionnement dans un modèle heuristique prédéterminé pour détecter cette anomalie.

Ainsi, le procédé selon l'invention est capable de détecter une attaque en cours exploitant des limitations ou des contraintes liées au protocole de sécurité d'un réseau en mesurant au moins un des paramètres de fonctionnement impactés par ladite attaque. Par exemple, en mesurant la latence des communications d'un nœud avec au moins un autre nœud du réseau, puis en injectant la valeur mesurée de cette latence dans un modèle heuristique, il est possible de détecter une latence anormale et donc de détecter une attaque en cours visant à ralentir la transmission de messages au sein du réseau blockchain.

De plus, il est possible avec le procédé selon l'invention de détecter une attaque de type éclipse, par exemple en mesurant la topologie de communication d'au moins un nœud, c'est-à-dire avec quels autres nœuds du réseau ledit nœud communique. En effet, une attaque éclipse contre un nœud du réseau vise à isoler ce nœud du reste du réseau blockchain ce qui implique un changement topologie de communication de ce nœud du réseau blockchain.

De manière nullement limitative, pour au moins un nœud, au moins un paramètre de fonctionnement mesuré peut par exemple être :
- une latence des communications d'un nœud avec au moins un autre nœud du réseau,
- une topologie de communication d'un nœud, c'est-à-dire avec quels autres nœuds du réseau le nœud mesuré communique
- une donnée de l'horloge interne du nœud,
- un état de représentation local du nœud,
- une qualité d'envoi, et
- propriété des « fragments » de la blockchain,
- Etc...

Par ailleurs, le procédé de détection selon l'invention est léger à implémenter dans un réseau blockchain car le procédé nécessite la mesure d'un ou plusieurs paramètres de fonctionnement et l'injection de ladite valeur mesurée dans un modèle heuristique prédéterminé pour détecter une anomalie.

Avantageusement, au moins un nœud mesuré peut être un nœud réel du réseau blockchain.

Par « nœud réel » on entend un nœud du réseau blockchain participant à la création de nouveaux blocs au sein du réseau blockchain.

Le procédé selon l'invention permet ainsi de surveiller le fonctionnement du réseau blockchain et de détecter d'éventuelles anomalies, en mesurant au moins un paramètre de fonctionnement directement au niveau d'un nœud réel du réseau blockchain, c'est-à-dire un nœud participant à la création et à l'ajout de nouveaux blocs dans la chaine de blocs.

Ainsi, le procédé selon l'invention peut être mis en œuvre dans tout réseau de blockchain actif.

Alternativement ou en plus, au moins un nœud mesuré peut être un nœud leurre déployé au sein du réseau blockchain.

Par « nœud leurre », on entend un nœud ne participant pas à la création et/ou à l'ajout de nouveau blocs dans la chaine de blocs.

Un tel nœud leurre ne participant pas à la création de nouveaux blocs de la blockchain, il peut être déployé au sein de tout réseau blockchain pour mesurer au moins un de ses paramètres de fonctionnement. Ainsi, le procédé selon l'invention permet de surveiller le fonctionnement d'un réseau blockchain et de détecter d'éventuelles anomalies, sans intervention sur les nœuds réels formant le réseau blockchain, c'est dire sur les nœuds participants au protocole blockchain au sein du réseau blockchain.

Suivant un mode de réalisation, la mesure du paramètre de fonctionnement d'un nœud mesuré peut être réalisée par ledit nœud mesuré, par exemple par un outil applicatif déployé au sein dudit nœud. La mesure du paramètre de fonctionnement peut aussi être réalisée par un processeur ou par un outil d'administration dudit nœud leurre ou encore par un système d'exploitation dudit nœud mesuré.

Alternativement, ou en plus, la mesure d'au moins un paramètre de fonctionnement d'au moins un nœud mesuré peut être réalisée par un dispositif externe audit nœud mesuré. Dans ce cas, ledit nœud mesuré est configuré pour autoriser un dispositif extérieur à faire cette mesure, et en particulier à accéder à des grandeurs au sein dudit nœud mesuré, par exemple à des grandeurs mémorisées dans un log interne dudit nœud mesuré.

Lorsque le nœud mesuré est un nœud leurre, ledit nœud mesuré peut être configuré pour enregistrer dans un log interne un échantillonnage plus précis des paramètres de fonctionnement, comparé à un nœud réel du réseau. La mesure d'au moins un paramètre de fonctionnement d'un tel nœud leurre peut ainsi être effectuée de manière plus précise et améliorer la précision ou la sensibilité de la détection d'anomalie au sein du réseau blockchain.

Alternativement ou en plus, lorsque le nœud mesuré est un nœud leurre, ledit nœud leurre peut être configuré pour enregistrer dans un log interne d'autres paramètres de fonctionnement, différents de ceux enregistrés par un nœud réel du réseau blockchain. Ainsi, il est possible de réaliser une mesure de paramètres de fonctionnement ne pouvant pas être mesurée dans le cadre d'un nœud réel, ce qui permet une détection d'une plus grande variété d'anomalies, ou du moins d'anomalies qui ne pourraient pas être détectées avec des nœuds réels.

Avantageusement, l'étape d'injection peut être mise en œuvre au niveau d'un nœud leurre déployé au sein du réseau blockchain.

Lorsque le nœud mesuré n'est pas ledit nœud leurre réalisant l'étape d'injection, le procédé selon l'invention peut comprendre une étape de transmission depuis ledit nœud mesuré d'au moins une valeur mesurée audit nœud leurre. Cette transmission peut être une transmission spécifique comprenant uniquement des données mesurées. Dans ce cas, au moins une valeur peut être transmise au sein d'une transaction dédiée ou spécifique entre le nœud mesuré et le nœud leurre.

Alternativement ou en plus, au moins une donnée mesurée peut être transmise conjointement à une transaction entre le nœud mesuré et le nœud réalisant l'étape d'injection. Plus particulièrement, le nœud mesuré peut transmettre au moins une donnée mesurée conjointement à chaque transaction avec le nœud réalisant l'étape d'injection.

La mise en œuvre de l'étape d'injection au niveau d'un nœud leurre permet d'avoir une plus grande sécurité de détection car il est possible d'implémenter une pluralité de nœuds leurres de sorte que lorsqu'un des nœuds leurre fait l'objet d'une attaque, un autre nœud leurre peut prendre le relais. De plus, le fait de mettre en œuvre l'étape d'injection au niveau d'un leurre permet de ne pas modifier le fonctionnement d'un nœud réel.

Alternativement, l'étape d'injection peut être mise en œuvre au niveau d'un module, dit central, le procédé comprenant en outre une étape de transmission d'au moins une valeur mesurée audit module central.

Ainsi, il est possible pour le procédé selon l'invention de mettre en œuvre l'étape d'injection au niveau d'un module, qui ne constitue pas un nœud du réseau blockchain au sens d'un nœud réel ou d'un nœud leurre. Cela permet de dissocier complètement les nœuds du réseau du module central chargé de détecter des anomalies au sein du réseau blockchain.

Avantageusement, et comme indiqué plus haut, la valeur mesurée d'au moins un paramètre de fonctionnement d'un nœud mesuré peut être lue dans un log de fonctionnement dudit nœud mesuré.

Cette valeur peut par exemple être lue par le nœud mesuré lui-même, qu'il soit un nœud leurre ou un nœud réel.

Alternativement, pour un nœud mesuré, cette valeur peut être lue par un module central ou un nœud leurre, autre que le nœud mesuré, en particulier lorsque l'étape d'injection est réalisée par ledit nœud leurre ou ledit module central.

Par exemple, la valeur d'au moins un paramètre peut être soit :
- lue directement dans le nœud mesuré par ledit nœud leurre ou ledit module central,
- soit transmise, seule ou avec une partie ou la totalité du log, au module central ou au nœud leurre.

Une telle transmission de la valeur mesurée ou du log peut être faite soit automatiquement par le nœud mesuré soit sur requête du module central ou du nœud leurre.

Avantageusement, au moins une, en particulier chaque, communication relative à la mise en œuvre du procédé peut être chiffrée.

Ainsi, chaque transmission de log, ou de valeur mesurée d'un paramètre, ou encore chaque requête de la part d'un nœud leurre ou du module central, peut être réalisée de manière chiffrée.

Ainsi, les données ainsi échangées ne peuvent pas être facilement interceptées et/ou manipulées par une entité voulant réaliser une cyberattaque.

Alternativement ou en plus, les échanges pour la mise en œuvre du procédé selon l'invention peuvent être réalisés au travers de canaux de communication dédiés, pour sécuriser lesdits échanges.

Avantageusement, au moins un modèle heuristique peut être prévu pour comparer au moins une valeur mesurée injectée à au moins une valeur seuil prédéfinie.

Ainsi, il est possible de détecter une anomalie par comparaison d'une valeur mesurée à une valeur seuil prédéfinie, et ce de manière simple sans utiliser de modèles complexes.

Alternativement, au moins un modèle heuristique peut être, ou peut comprendre, un réseau neuronal préalablement entrainé pour détecter au moins une anomalie à partir d'au moins une valeur d'un paramètre de fonctionnement qui lui est fournie.

Ainsi, le procédé selon l'invention permet de détecter des attaques dont les symptômes sont plus complexes et dépendent de la valeur de plusieurs paramètres de fonctionnement. Le procédé selon l'invention permet de réaliser une détection plus complète d'anomalies, en particulier d'anomalies symptomatiques à une cyberattaque et donc moins susceptible de générer des faux positifs.

De plus, afin d'améliorer d'avantage la précision de détection d'anomalies du procédé selon l'invention, il est possible d'utiliser un réseau neuronal préalablement entrainé pour signaler une éventuelle anomalie en fonction d'une pluralité de mesures de paramètres de fonctionnement :
- différents, et/ou
- effectués au sein de différents nœuds du réseau.

Avantageusement, le procédé selon l'invention peut comprendre une étape d'envoi d'un message d'alerte lorsque l'étape d'injection signale une anomalie.

L'alerte peut être envoyée uniquement au nœud concerné par l'anomalie.

Alternativement, l'alerte peut être envoyée à tous les nœuds du réseau blockchain qui ne sont pas concernés par l'anomalie.

Selon une autre alternative, l'alerte peut être envoyée à tous les nœuds du réseau blockchain.

Ainsi, chaque nœud recevant un message d'alerte peut mettre en œuvre des procédures de défense prédéfinies dans le protocole blockchain, tel que par exemple arrêter toute communication au sein du réseau.

En outre, lorsque l'étape d'injection signale une anomalie, le procédé selon l'invention peut comprendre une étape de réponse sur incident comprenant une exécution d'une combinaison quelconque d'au moins une des mesures suivantes :
- exclusion de certains nœuds qui ont un comportement byzantin,
- suspension du protocole le temps de faire un rapport et éviter de forger des blocs corrompus,
- faire une mise à jour du protocole via un consensus.

Ces mesures peuvent être prédéfinies dans le protocole blockchain.

L'étape de réponse sur incident peut être réalisée en même temps ou après l'étape d'envoi d'un message d'alerte.

Selon un autre aspect de l'invention il est proposé un programme d'ordinateur comprenant des instructions informatiques, qui, lorsqu'elles sont exécutées par un appareil informatique, mettent en œuvre le procédé selon l'invention.

Selon un autre aspect de l'invention il est proposé un réseau blockchain comprenant une pluralité de nœuds, configuré pour mettre en œuvre le procédé selon l'invention.

Avantageusement, le réseau peut comprendre au moins un nœud leurre.

Un tel nœud leurre peut être utilisé comme nœud mesuré et/ou peut être configuré pour mettre en œuvre l'étape d'injection, tel que décrit plus haut.

Alternativement ou en plus, le réseau peut comprendre un module central, prévu pour mettre en œuvre l'étape d'injection. Cela permet de dissocier complètement les nœuds du réseau du module central chargé de détecter des anomalies au sein du réseau blockchain.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique d'un exemple de réalisation nullement limitatif d'un procédé selon l'invention ;
- la FIGURE 2 est une représentation schématique d'un autre exemple de réalisation nullement limitatif d'un procédé selon l'invention ;
- la FIGURE 3 est une représentation schématique d'un exemple de réalisation nullement limitatif d'un réseau blockchain selon l'invention ;
- la FIGURE 4 est une représentation schématique d'un autre exemple de réalisation nullement limitatif d'un réseau blockchain selon l'invention ;
- la FIGURE 5 est une représentation schématique d'un autre exemple de réalisation nullement limitatif d'un réseau blockchain selon l'invention ; et
- la FIGURE 6 est une représentation schématique d'un autre exemple de réalisation nullement limitatif d'un réseau blockchain selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

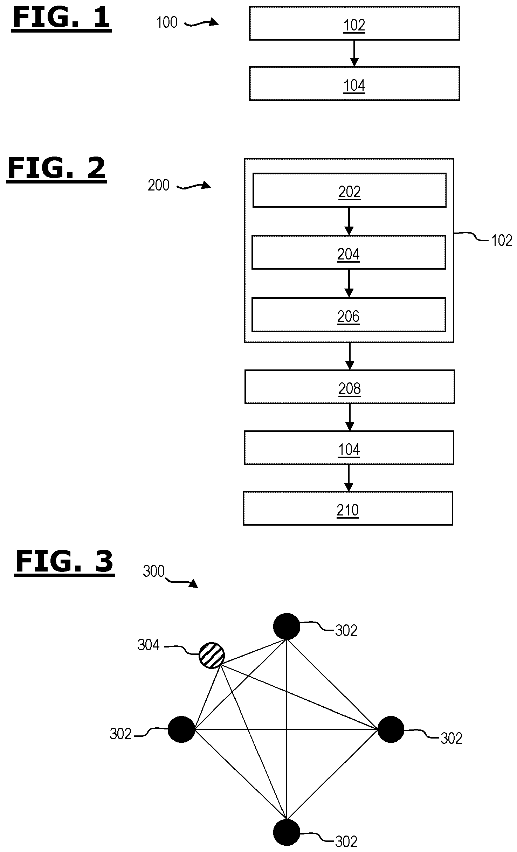

La FIGURE 1 est une représentation schématique d'un exemple de réalisation nullement limitatif d'un procédé selon l'invention.

Le procédé 100 de la FIGURE 1 est un procédé de détection d'une anomalie au sein d'un réseau blockchain comprenant une pluralité de nœuds.

Le procédé 100 comprend une étape 102 de mesure d'au moins un paramètre de fonctionnement d'au moins un nœud, dit nœud mesuré, du réseau blockchain.

Au moins un nœud mesuré lors de l'étape 102 peut être un nœud réel du réseau blockchain, c'est-à-dire un nœud participant à la création de nouveaux blocs de la blockchain.

Alternativement ou en plus, au moins un nœud mesuré lors de l'étape 102 peut être un nœud leurre, déployé au sein du réseau blockchain mais ne participant pas à la création de nouveaux blocs de la blockchain.

De manière nullement limitative, pour au moins un nœud, l'au moins un paramètre de fonctionnement mesuré lors de l'étape 102 peut par exemple être ou comprendre :
- une latence des communications d'un nœud avec au moins un autre nœud du réseau,
- une topologie de communication d'un nœud, c'est-à-dire avec quels autres nœuds du réseau le nœud mesuré communique,
- une donnée de l'horloge interne du nœud,
- un état de représentation local du nœud,
- une qualité d'envoi,
- propriété des « fragments » de la blockchain,
- etc...

Le procédé 100 comprend en outre, après l'étape de mesure 102, une étape 104 d'injection de ladite au moins une valeur mesurée d'au moins un paramètre de fonctionnement dans un modèle heuristique prédéterminé signalant une éventuelle anomalie au sein dudit réseau blockchain en fonction de ladite au moins une valeur mesurée.

Le fonctionnement d'au moins un nœud du réseau de blockchain étant perturbé lors d'une cyberattaque, il est ainsi possible avec le procédé 100 de détecter une anomalie symptomatique d'une cyberattaque en injectant dans un modèle heuristique prédéterminé, lors de l'étape 104, au moins une valeur d'un paramètre de fonctionnement mesurée lors de l'étape 102.

Le modèle heuristique peut par exemple être prévue pour comparer au moins une valeur mesurée a au moins un seuil prédéfinit.

Alternativement, le modèle heuristique peut par exemple être ou comprendre un réseau neuronal préalablement entrainé pour la détection d'anomalie.

L'étape 104 d'injection peut par exemple être mise en œuvre au niveau d'un nœud leurre déployé au sein du réseau blockchain mais ne participant pas à la création de nouveaux blocks de la blockchain.

L'étape 102 de mesure et l'étape 104 d'injection peuvent par exemple être mise en œuvre au niveau d'un même nœud leurre.

Selon un autre exemple, l'étape 104 d'injection peut être mise en œuvre au niveau module central du réseau blockchain mais qui ne constitue pas un nœud du réseau blockchain.

La FIGURE 2 est une représentation schématique d'un autre exemple de réalisation nullement limitatif d'un procédé selon l'invention.

Le procédé 200 comprend l'intégralité des étapes du procédé 100 décrit en relation avec la FIGURE 1.

Dans le procédé 200 de la FIGURE 2, l'étape de mesure 102 de mesure d'au moins un paramètre de fonctionnement d'au moins un nœud mesuré comprend les étapes suivantes :
- une étape de 202 d'envoi, par un nœud leurre du réseau à un nœud mesuré, d'une requête d'envoi d'au moins une partie de son log de fonctionnement,
- une étape 204 d'émission de ladite au moins une partie du log de fonctionnement par le nœud mesuré audit nœud leurre, en réponse à la requête, et
- une étape 206 de lecture d'au moins une partie du log de fonctionnement.

Le nœud mesuré peut par exemple être un nœud réel ou un nœud leurre différent de celui envoyant la requête.

Le procédé 200 comprend en outre, après l'étape de mesure 102 et avant l'étape d'injection 104 une étape 208 de transmission, à un module central du réseau blockchain, d'au moins une valeur mesurée lors de l'étape 102.

Dans cet exemple de réalisation, l'étape 104 d'injection d'au moins une valeur mesurée dans un modèle heuristique est effectuée au niveau dudit module central.

Le procédé 200 comprend en outre, lorsqu'une anomalie est signalée par le modèle heuristique, une étape 208 d'envoi d'un message d'alerte à chacun des nœuds du réseau ou uniquement au nœud concerné par l'anomalie.

Selon une alternative de réalisation, le nœud mesuré, de préférence un nœud leurre, peut être configuré pour émettre automatiquement et à une fréquence donnée au moins une partie de son log de fonctionnement au nœud leurre en charge de la lecture. Dans ce cas, l'étape 202 d'envoi d'une requête n'est pas nécessaire et donc pas réalisée.

Selon une autre alternative de réalisation, la mesure d'au moins un paramètre de fonctionnement d'un nœud mesuré peut être mise en œuvre par le nœud lui-même. Ainsi, ni l'envoi d'une requête ni l'émission d'au moins une partie du log n'est requis pour lire ledit log lors de l'étape. Dans ce cas, ni l'étape 202 d'envoi d'une requête ni l'étape 204 d'émission d'au moins une partie du log ne sont réalisée.

Selon encore une autre alternative de réalisation, l'injection d'au moins une valeur mesurée d'au moins un paramètre de fonctionnement dans un modèle heuristique peut être réalisée au niveau du nœud leurre mesuré. Dans ce cas, ni l'étape 202 d'envoi d'une requête, ni l'étape 204 d'émission d'au moins une partie du log, ni l'étape de transmission 208 ne sont réalisée.

La FIGURE 3 est une représentation schématique d'un exemple de réalisation nullement limitatif d'un réseau blockchain selon l'invention.

La FIGURE 3 illustre un réseau blockchain 300 configuré pour mettre en œuvre le procédé 100 décrit en relation de la FIGURE 1, et plus généralement un procédé selon l'invention.

Dans l'exemple représenté, le réseau 300 comprend quatre nœuds réels 302 et un nœud leurre 304.

Pour des raisons de lisibilité, le nombre de nœuds réel 302 illustrés en FIGURE 3 est de quatre. Il apparaitra toutefois évident qu'un réseau blockchain peut comprendre un nombre de nœuds réels autre que quatre.

Toujours dans l'exemple de la FIGURE 3, tous les nœuds 302, 304 sont en communication entre eux. Toutefois, en fonction du protocole blockchain utilisé et en fonction du nombre de nœuds du réseau blockchain, il est possible que tous les nœuds du réseau blockchain ne soient pas en communication entre eux.

Suivant un exemple de réalisation, chaque nœud du réseau 300 peut être un nœud mesuré. Ainsi, une valeur d'au moins un paramètre de fonctionnement peut être mesuré, lors de l'étape de mesure, pour chaque nœud réel 302 et le nœud leurre 304.

Toujours suivant un exemple de réalisation, l'étape d'injection, et en particulier l'étape 104, peut être réalisée dans le nœud leurre 304. Dans ce cas, chaque nœud réel 302 communique la valeur du ou des paramètres mesurés au nœud leurre, soit de manière automatisée à une fréquence donnée, soit sur requête du nœud leurre 304. Ainsi, le nœud leurre 304 reçoit les valeurs des paramètres de fonctionnement de tous les nœuds réels 302 du réseau 300. Il dispose également des valeurs de ses propres paramètres de fonctionnement. Il peut ainsi réaliser une détection d'anomalie en injectant ces valeurs mesurées dans un modèle heuristique, ensemble ou séparément.

L'injection des valeurs dans un module heuristique peut être réalisé pour chaque nœud mesuré individuellement.

Alternativement, l'injection des valeurs dans un module heuristique peut être réalisée individuellement pour chaque paramètre de fonctionnement. Dans ce cas, il est possible d'injecter ensemble plusieurs valeurs mesurées de ce paramètre de fonctionnement au niveau de plusieurs nœuds mesurés. Par exemple, il est possible d'injecter la topologie de communication de plusieurs nœuds mesurés dans un modèle heuristique pour détecter si un de ces nœuds mesurés présente une anomalie.

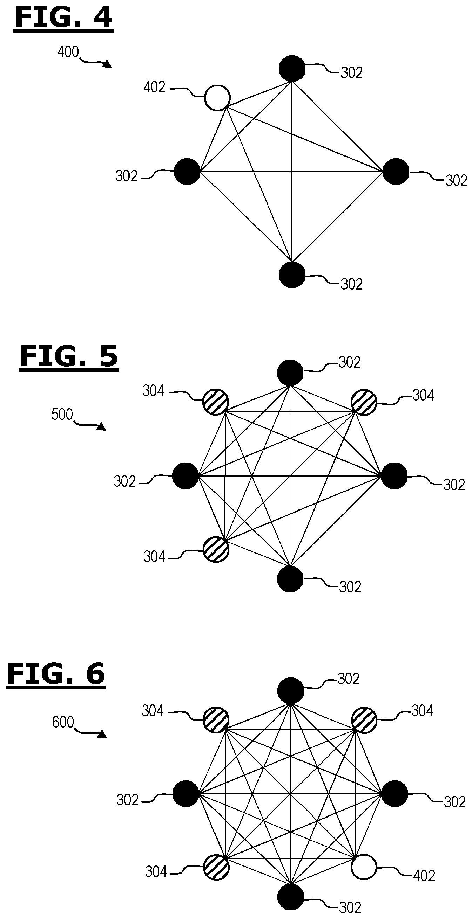

La FIGURE 4 est une représentation schématique d'un autre exemple de réalisation nullement limitatif d'un réseau blockchain selon l'invention.

Le réseau blockchain 400 illustré en FIGURE 4 diffère du réseau 300 illustré en FIGURE 3 en ce que le nœud leurre 304 est remplacé par un module central 402. Le module central 402 est en communication avec chacun des nœuds 302 du réseau 400. Toutefois, contrairement à un nœud leurre 304, le module central 402 n'agit pas en tant que nœud au sein du réseau 400 au sens d'un nœud réel ou d'un nœud leurre.

Suivant un exemple de réalisation, chaque nœud réel du réseau 400 peut être mesuré. Ainsi, une valeur d'au moins un paramètre de fonctionnement peut être mesuré, lors de l'étape de mesure, pour chaque nœud réel 302.

Toujours suivant un exemple de réalisation, l'étape d'injection, et en particulier l'étape 104, peut être réalisée dans le module central 402. Dans ce cas, chaque nœud réel 302 communique la valeur du ou des paramètres mesurés au module central 402, soit de manière automatisée à une fréquence donnée, soit sur requête du module central 402. Ainsi, module central 402 reçoit les valeurs des paramètres de fonctionnement de tous les nœuds réels 302 du réseau 400. Il peut ainsi réaliser une détection d'anomalie en injectant ces valeurs mesurées dans un modèle heuristique, ensemble ou séparément.

La FIGURE 5 est une représentation schématique d'un autre exemple de réalisation nullement limitatif d'un réseau blockchain selon l'invention.

Le réseau blockchain 500 illustré en FIGURE 5 comprend l'intégralité des éléments du réseau 300 de la FIGURE 3.

Le réseau 500 comprend en outre deux autres nœuds leurres 304. Tous les nœuds 302, 304 sont en communication entre eux.

Suivant un exemple de réalisation, chaque nœud 302 et 304 du réseau 500 peut être un nœud mesuré. Ainsi, une valeur d'au moins un paramètre de fonctionnement peut être mesuré, lors de l'étape de mesure, pour chaque nœud réel 302 et chaque nœud leurre 304.

Toujours suivant un exemple de réalisation, l'étape d'injection, et en particulier l'étape 104, peut être réalisée dans l'un quelconque des nœuds leurre 304.

Dans ce cas, le nœud leurre 304 au niveau duquel est mise en œuvre l'étape d'injection peut recevoir les valeurs des paramètres de fonctionnement de tous les autres nœuds du réseau, réels 302 et leurres 304.

Il dispose également des valeurs de ses propres paramètres de fonctionnement. Il peut ainsi réaliser une détection d'anomalie en injectant ces valeurs mesurées dans un modèle heuristique, ensemble ou séparément.

La FIGURE 6 est une représentation schématique d'un autre exemple de réalisation nullement limitatif d'un réseau blockchain selon l'invention.

Le réseau blockchain 600 illustré en FIGURE 6 comprend l'intégralité des éléments du réseau 500 de la FIGURE 5.

Le réseau 600 comprend en outre un module centrale 402 en communication avec chacun des nœuds réels 302 et leurres 304.

Suivant un exemple de réalisation, chaque nœud 302 et 304 du réseau 600 peut être un nœud mesuré. Ainsi, une valeur d'au moins un paramètre de fonctionnement peut être mesuré, lors de l'étape de mesure, pour chaque nœud réel 302 et chaque nœud leurre 304.

Toujours suivant un exemple de réalisation, l'étape d'injection, et en particulier l'étape 104, peut être réalisée dans le module central 402.

Dans ce cas, chaque nœud réel 302 et chaque nœud leurre communique la valeur du ou des paramètres mesurés au module central 402, soit de manière automatisée à une fréquence donnée, soit sur requête du module central 402. Ainsi, module central 402 reçoit les valeurs des paramètres de fonctionnement de tous les nœuds réels 302 et leurres 304 du réseau 600. Il peut ainsi réaliser une détection d'anomalie en injectant ces valeurs mesurées dans un modèle heuristique, ensemble ou séparément.

Bien entendu, l'invention n'est pas limitée aux exemples détaillés cidessus.

## Revendications

1. Procédé (100;200) de détection d'anomalie(s) au sein d'un réseau blockchain (300;400;500;600) comprenant une pluralité de nœuds (302,304), ledit procédé (100;200) comprenant au moins une itération des étapes suivantes :
- pour au moins un nœud, dit nœud mesuré, (302,304) dudit réseau (300;400;500;600), mesure (102) d'au moins un paramètre de fonctionnement dudit nœud mesuré (302,304) ; et
- injection (104) de ladite au moins une valeur mesurée d'au moins un paramètre de fonctionnement dans au moins un modèle heuristique prédéterminé signalant une éventuelle anomalie au sein dudit réseau blockchain (300;400;500;600) en fonction de ladite au moins une valeur mesurée.

2. Procédé (100;200) selon la revendication précédente, **caractérisé en ce que** au moins un nœud mesuré est un nœud réel (302) du réseau blockchain (300;400;500;600).

3. Procédé (100;200) selon la revendication précédente, **caractérisé en ce que** au moins un nœud mesuré est un nœud leurre (304) déployé au sein du réseau blockchain (300;500;600).

4. Procédé (100) selon l'une quelconque des revendications précédentes, **caractérisé en ce que** l'étape d'injection (104) est mise en œuvre au niveau d'un nœud leurre (304) déployé au sein du réseau blockchain (300;500;600).

5. Procédé (100;200) selon l'une quelconque des revendications 1 à 3, **caractérisé en ce que** l'étape d'injection (104) est mise en œuvre au niveau d'un module (402), dit central, le procédé (100;200) comprenant en outre une étape (208) de transmission d'au moins une valeur mesurée audit module central (402).

6. Procédé (100;200) selon l'une quelconque des revendications précédentes, **caractérisé en ce que** la valeur mesurée d'au moins un paramètre de fonctionnement d'un nœud mesuré (302,304) est lue dans un log de fonctionnement dudit nœud mesuré (302,304).

7. Procédé (100;200) selon l'une quelconque des revendications précédentes, **caractérisé en ce qu'**au moins une communication relative à la mise en œuvre du procédé (100;200) est chiffrée.

8. Procédé (100;200) selon l'une quelconque des revendications précédentes, **caractérisé en ce qu'**au moins un modèle heuristique est prévu pour comparer au moins une valeur mesurée injectée à au moins une valeur seuil prédéfinie.

9. Procédé (100;200) selon l'une quelconque des revendications précédentes, **caractérisé en ce qu'**au moins un modèle heuristique est, ou comprend, un réseau neuronal préalablement entrainé pour détecter au moins une anomalie à partie d'au moins une valeur d'un paramètre de fonctionnement qui lui est fournie.

10. Procédé (100;200) selon l'une quelconque des revendications précédentes, **caractérisé en ce qu'**il comprend une étape (210) d'envoi d'un message d'alerte lorsque l'étape d'injection (104) signale une anomalie.

11. Procédé (100;200) selon l'une quelconque des revendications précédentes, **caractérisé en ce que**, lorsque l'étape d'injection (104) signale une anomalie, ledit procédé (100;200) comprend en outre une étape de réponse sur incident comprenant une exécution d'une combinaison quelconque d'au moins une des mesures suivantes :
- exclusion de certains nœuds qui ont un comportement byzantin,
- suspension du protocole le temps de faire un rapport et éviter de forger des blocs corrompus,
- faire une mise à jour du protocole via un consensus.

12. Programme d'ordinateur comprenant des instructions informatiques, qui, lorsqu'elles sont exécutées par un appareil informatique, mettent en œuvre le procédé (100;200) selon l'une quelconque des revendications précédentes.

13. Réseau blockchain (300;400;500;600) comprenant une pluralité de nœuds (302,304), configuré pour mettre en œuvre le procédé (100;200) selon l'une quelconque des revendications 1 à 11.

14. Réseau (300;500;600) selon la revendication précédente, **caractérisé en ce qu'**il comprend au moins un nœud leurre (304).

15. Réseau (400;600) selon la revendication 13 ou 14, **caractérisé en ce qu'**il comprend un module central (402).
